# EUROPÄISCHE PATENTSCHRIFT

(11) **EP 3 594 059 B1**
(45) Veröffentlichungstag und Bekanntmachung des Hinweises auf die Patenterteilung: **09.03.2022**
(21) Anmeldenummer: 18182614.0
(22) Anmeldetag: 10.07.2018
(51) Int. Cl.: B60Q 1/14, F21S 41/143, F21S 41/63, F21S 41/657, F21S 41/663

(54) **MODULAR AUFGEBAUTES KRAFTFAHRZEUGSCHEINWERFERLICHTMODUL**
MODULAR HEADLAMP FOR MOTOR VEHICLE
PHARE DE VÉHICULE AUTOMOBILE DE CONCEPTION MODULAIRE

(43) Veröffentlichungstag der Anmeldung: 15.01.2020
(73) Patentinhaber: ZKW Group GmbH, 3250 Wieselburg (AT)
(72) Erfinder: Schadenhofer, Peter, 3382 Roggendorf (AT); Hartmann, Peter, 3392 Schönbühel an der Donau (AT); Jackl, Christian, 3250 Wieselburg (AT); Mandl, Bernhard, 3200 Ober-Grafendorf (AT); Sporn, Martin, 3390 Melk (AT)
(74) Vertreter: Patentanwaltskanzlei Matschnig & Forsthuber OG

(56) Entgegenhaltungen:
- EP-A1- 3 115 256
- EP-A1- 3 282 181
- WO-A1-2015/107273
- DE-A1-102013 217 597
- JP-A- 2013 125 676
- US-A1- 2016 368 414
- US-A1- 2017 232 882

## Beschreibung

Die Erfindung betrifft ein modular aufgebautes Kraftfahrzeugscheinwerferlichtmodul für einen Kraftfahrzeugscheinwerfer umfassend eine Mehrzahl benachbart angeordneter Teil-Lichtmodule, wobei jedes Teil-Lichtmodul ein Leuchtmittel, eine Projektionsvorrichtung, die dem Leuchtmittel zugeordnet ist, und Antriebsmittel aufweist, wobei die Projektionsvorrichtung eingerichtet ist, von dem Leuchtmittel erzeugtes Licht in Form zumindest eines, vorzugsweise genau eines Segments einer segmentierten Lichtverteilung beziehungsweise einer Teil-Lichtverteilung vor das modular aufgebautes Kraftfahrzeugscheinwerferlichtmodul abzubilden.

Weiters betrifft die Erfindung einen Kraftfahrzeugscheinwerfer, vorzugsweise ein Adaptive-Driving-Beam-Kraftfahrzeugscheinwerfer mit zumindest einem modular aufgebauten Kraftfahrzeugscheinwerferlichtmodul der oben genannten Art.

Darüber hinaus betrifft die Erfindung ein dynamisches Ausblendverfahren zum Ausblenden eines Bereichs einer bereitgestellten segmentierten Lichtverteilung, welches unter Verwendung des Kraftfahrzeugscheinwerferlichtmoduls der oben genannten Art erfolgt.

Kraftfahrzeugscheinwerferlichtmodule zum Bilden von segmentierten Lichtverteilungen sind aus dem Stand der Technik bekannt. Das Abblendlicht wird beispielsweise durch, hinter Lichtscheiben verborgenen, Linsen geformt, die dem gewünschten Design des Kraftfahrzeugscheinwerferlichtmoduls entsprechend angeordnet sind. Üblicherweise werden die Lichtverteilungen getrennt erzeugt, das heißt, dass beispielsweise eine linke Hälfte der Lichtverteilung durch ein (nicht modular aufgebautes) Kraftfahrzeugscheinwerferlichtmodul in einem linken Kraftfahrzeugscheinwerfer erzeugt wird und eine rechte Hälfte der Lichtverteilung durch ein (ebenfalls nicht modular aufgebautes) Kraftfahrzeugscheinwerferlichtmodul in einem rechten Kraftfahrzeugscheinwerfer erzeugt wird.

Die Baugröße der Reflektoren bei den herkömmlichen Lichtmodulen ist relativ groß. Diese Abmessungen können bei einem herkömmlichen Lichtmodul zum Erzeugen einer Teil-Fernlichtverteilung in etwa 80x45x35mm (Breite x Höhe x Tiefe) betragen. Außerdem besteht der Fernlichtbereich bei vielen herkömmlichen Lichtmodulen nur aus zwei großen Segmenten - einem rechten und einem linken Segment - welche beispielsweise jeweils 15° nach fahrzeugaußenseitig und 8° nach fahrzeuginnenseitig schwenkbar sind. Dadurch ist die Gestaltung eines Bereichs, den man beispielsweise ausblenden möchte, um Blendung anderer Verkehrsteilnehmer zu vermeiden, ziemlich eingeschränkt.

Weiters sind auch segmentierte Fernlichtverteilungen bekannt, bei welchen die einzelnen Segmente in einer horizontalen Reihe nebeneinander angeordnet sind.

Die Aufgabe der vorliegenden Erfindung ist daher, die Kraftfahrzeugscheinwerferlichtmodule weiterzubilden und ein Kraftfahrzeugscheinwerferlichtmodul zu schaffen, das eine Mannigfaltigkeit an Gestaltungsmöglichkeiten einer segmentierten Lichtverteilung darbietet.

Diese Aufgabe wird durch ein Kraftfahrzeugscheinwerfersystem nach den Merkmalen des Anspruchs 1 gelöst.

Dabei sind die Leuchtmittel vorzugsweise zum Erzeugen von kollimiertem Licht eingerichtet beziehungsweise dementsprechend ausgebildet. Die Antriebsmittel sind vorzugsweise elektrisch.

Ein Teil-Lichtmodul kann beispielsweise etwa 14 mm breit mal 14 mm hoch sein und beispielsweise ein Segment erzeugen, das 5° breit ist. Dabei kann ein Teil-Lichtmodul eine Bautiefe von etwa 50mm bis etwa 70mm, vorzugsweise etwa 55mm betragen. Eine optische Bautiefe, bei der nur der optisch relevante Teil des Teil-Lichtmodul berücksichtigt wird, kann dabei etwa 25mm bis 30mm betragen. Das Segment kann auch 5° hoch oder höher sein. Segmente weisen im Allgemeinen eine im Wesentlichen rechteckige Form auf. Die mithilfe der erfindungsgemäßen Teil-Lichtmodule erzeugten Segmente können beispielsweise Form eines horizontal oder vertikal ausgedehnten Rechtecks aufweisen. Dem Fachmann ist an dieser Stelle klar, dass die Maße der Segmente auf eine Projektion des Segments der Lichtverteilung auf eine quer zu Hauptabstrahlrichtung des Kraftfahrzeugscheinwerferlichtmoduls angeordneten Ebene, wie beispielsweise ein um etwa 25 Meter beabstandeter Messschirm in einem Lichttechniklabor, bezogen sind. Verwendung von Winkelkoordinaten ist auf dem Gebiet der KFZ-Lichttechnik üblich.

Dem Fachmann ist außerdem klar, dass das Kraftfahrzeugscheinwerferlichtmodul eine Lichtverteilung beziehungsweise eine Teil-Lichtverteilung bildet, wenn es in Betrieb genommen wird.

Ein Vorteil dabei ist, dass die einzelnen Segmente nicht einer bestimmten Hälfte (s.o.) der Lichtverteilung zugeordnet sein müssen. So kann eine Lichtverteilung beispielsweise aus 3 rechten und 7 linken Segmenten usw. gebildet sein.

Es ist vorgesehen, dass jede Projektionsvorrichtung eine Eintrittsoptik, welche eine Mehrzahl in einer zu einer Hauptabstrahlrichtung des Teil-Lichtmoduls im Wesentlichen orthogonal stehenden Ebene matrixartig angeordneter Mikro-Eintrittsoptiken aufweist, und eine der Eintrittsoptik in die Hauptabstrahlrichtung nachgelagerte Austrittsoptik umfasst, welche Austrittsoptik eine Mehrzahl in einer zu der Hauptabstrahlrichtung im Wesentlichen orthogonal stehenden Ebene matrixartig angeordneter Mikro-Austrittsoptiken aufweist, wobei die Mikro-Eintrittsoptiken und die Mikro-Austrittsoptiken derart zueinander positioniert sind, dass sie eine Mehrzahl matrixartig angeordneter Mikro-Projektionssysteme bilden, wobei jedes Mikro-Projektionssystem zum Bilden einer Mikro-Lichtverteilung eingerichtet ist und alle Mikro-Lichtverteilungen gemeinsam das zumindest eine Segment der segmentierten Lichtverteilung beziehungsweise der segmentierten Teil-Lichtverteilung bilden.

Weiters kann die Projektionsvorrichtung eine Blendenvorrichtung umfassen, welche zwischen der Eintrittsoptik und Austrittsoptik angeordnet sein kann und zum Gestalten der Lichtverteilung und/oder zum Korrigieren von beispielsweise durch die Dicke der in der Projektionsvorrichtung verwendeten Linsen entstehenden Abbildungsfehlern vorgesehen ist.

Zwischen der Eintrittsoptik und der Austrittsoptik kann eine Trägerplatte, beispielsweise eine Glassubstrat-Platte vorgesehen sein, auf deren zu der Hauptabstrahlrichtung (zusammenfallend mit der optischen Achse des Lichtmoduls) orthogonal stehenden Oberflächen die Eintrittsoptik und die Austrittsoptik aufgebracht sind.

Die Projektionsvorrichtungen dieser Art sind aus den Anmeldungen der Anmelderin bekannt. Zwecks weiterer Details zu den hier verwendeten Projektionsvorrichtungen wird auf die internationalen Patentanmeldungen WO 2015/058227 A1, WO 2017/066817 A1 und WO 2017/066818 A1 der Anmelderin verwiesen.

Es ist erfindungsgemäß vorgesehen, dass einem jeden Teil-Lichtmodul zwei Verschwenkachsen - eine im Wesentlichen vertikale und eine im Wesentlichen horizontale Verschwenkachse - zugeordnet sind und die Antriebsmittel eingerichtet sind, zumindest die Projektionsvorrichtung des Teil-Lichtmoduls um diese zwei Verschwenkachsen zu verschwenken wodurch das zumindest eine Segment sowohl im Wesentlichen horizontal als auch im Wesentlichen vertikal hin- und herbewegbar ist.

Eine besonders einfache Bauart kann sich ergeben, wenn die Teil-Lichtmodule als Teil-Lichtmodule des Projektionstyps ausgebildet sind.

Hinsichtlich Verschwenkens einzelner Projektionsvorrichtungen beziehungsweise einzelner Teil-Lichtmodul kann es vorteilhaft sein, wenn die Projektionsvorrichtungen der Teil-Lichtmodule voneinander beabstandet sind.

Erfindungsgemäß ist es vorgesehen, dass das modular aufgebaute Kraftfahrzeugscheinwerferlichtmodul zusätzlich eine Steuereinrichtung umfasst, welche Steuereinrichtung eingerichtet und/oder konfiguriert ist, zumindest die Projektionsvorrichtung eines jeden Teil-Lichtmoduls mithilfe der dazugehörigen Antriebsmittel in eine vorbestimmte Lage zu verschwenken.

Bei einer praxisbewährten Ausführungsform kann die segmentierte Lichtverteilung als eine segmentierte Teil-Fernlichtverteilung ausgebildet sein.

Eine besonders vorteilhafte Modularität ergibt sich, die Projektionsvorrichtung und das Leuchtmittel um die im Wesentlichen vertikal ausgerichtete Verschwenkachse verschwenkbar sind und die Antriebsmittel eingerichtet sind, die Projektionsvorrichtung und das Leuchtmittel gleichzeitig, vorzugsweise aufeinander abgestimmt, beispielsweise synchron, zu verschwenken. Dabei können die optischen Komponenten der Teil-Lichtmodule als Ganzes um die entsprechende Verschwenkachse verschwenkbar sein. Die Projektionsvorrichtung und das Leuchtmittel können dabei beispielsweise in einem Tragrahmen angeordnet sein, wobei die Antriebsmittel eingerichtet sein können, diesen Tragrahmen und folglich das Leuchtmittel gleichzeitig und vorzugsweise aufeinander abgestimmt, beispielsweise synchron mit der Projektionsvorrichtung zu verschwenken.

Weitere Vorteile ergeben sich, wenn das Kraftfahrzeugscheinwerferlichtmodul ferner ein Grund-Lichtmodul umfasst, welches Grund-Lichtmodul eingerichtet ist, eine Grund-Lichtverteilung zu bilden, wobei die Grund-Lichtverteilung gemeinsam mit der segmentierten Lichtverteilung eine segmentierte Gesamtlichtverteilung, wie eine segmentierte Fernlichtverteilung, bildet.

Ein solches Grund-Lichtmodul kann beispielsweise als ein herkömmliches Mikroprojektions-Lichtmodul ausgebildet sein, das aus den internationalen Patentanmeldungen WO 2015/058227 A1, WO 2017/066817 A1 und WO 2017/066818 A1 der Anmelderin wohl bekannt ist. Das Grund-Lichtmodul ist vorzugsweise starr (nicht verschwenkbar) in dem gesamten Kraftfahrzeugscheinwerferlichtmodul angeordnet.

Dabei kann es zweckmäßig sein, wenn die Grund-Lichtverteilung als eine Abblendlichtverteilung oder einer Vorfeld-Lichtverteilung ausgebildet ist.

Besonders günstige Form des Kraftfahrzeugscheinwerferlichtmoduls ergibt sich, wenn das Grund-Lichtmodul und die Teil-Lichtmodule derart angeordnet sind, dass das Kraftfahrzeugscheinwerferlichtmodul U-förmig ausgebildet ist, wobei die Teil-Lichtmodule vertikale Abschnitte und das Grund-Lichtmodul einen im Wesentlichen horizontalen, die vertikalen Abschnitte verbindenden Abschnitt des U-förmigen Kraftfahrzeugscheinwerferlichtmoduls bilden.

Weiters kann es vorgesehen sein, dass das Grund-Lichtmodul zumindest zwei in vertikaler Richtung voneinander beabstandete, sich im Wesentlichen horizontal erstreckende quaderförmige Submodule umfasst, die Teil-Lichtmodule zwischen den Sublichtmodulen angeordnet und als sich im Wesentlichen vertikal erstreckende Quader ausgebildet sind.

Das eben Gesagte zeigt, dass die Anzahl der Anordnungsmöglichkeiten einzelner Teil-Lichtmodul und/oder Grund-Lichtmodul(e) in dem Kraftfahrzeugscheinwerferlichtmodul groß ist, wobei der Typ der erzeugten segmentierten Lichtverteilung, beispielsweise der segmentierten Gesamtlichtverteilung, wie der segmentierten Fernlichtverteilung derselbe bleibt.

Die Anzahl der oben genannten Teil-Lichtmodule kann groß sein. Beispielsweise kann ein erfindungsgemäßes Kraftfahrzeugscheinwerferlichtmodul 20 bis 40 solcher Teil-Lichtmodule 2 umfassen, wobei jedes Teil-Lichtmodul 2 einen Bereich der Lichtverteilung oder der Gesamtlichtverteilung - ein Segment - ausleuchtet. Durch gezieltes Ausschalten unterschiedlicher Teil-Lichtmodule 2 können unterschiedliche Segmente der entsprechenden Lichtverteilung ausgeblendet werden und folglich unterschiedliche Ausblendszenarien realisiert werden.

Durch eine hohe Anzahl der Teil-Lichtmodule in dem Kraftfahrzeugscheinwerferlichtmodul kann eine hohe Auflösung des Ausblendens erzielt werden. Es wurde festgestellt, dass je höher die Anzahl der Teil-Lichtmodule ist, umso höher ist die Auflösung der Ausblendung. Durch Verschwenken, kann die Auflösung noch mehr erhöht werden, weil man flexibel Positionen mit den Teil-Lichtmodulen Ausleuchten kann und diese nicht starr sind. Außerdem ist es denkbar, dass die Teil-Lichtmodule unterschiedlich groß sind, vorzugsweise unterschiedliche Höhen und/oder Breiten aufweisen. Auf diese Weise können Segmente unterschiedlicher Größen, vorzugsweise Höhen und/oder Breiten, erzeugt werden. Beispielsweise kann damit eine segmentierte Lichtverteilung aus mehreren in einer im Wesentlichen horizontalen Reihe angeordneten Segmenten geschaffen werden, bei welcher Lichtverteilung die Segmente zu Mitte der Lichtverteilung immer schmäler werden.

Die Aufgabe der Erfindung wird außerdem mit einem dynamischen Ausblendverfahren zum Ausblenden eines Bereichs einer mittels eines Kraftfahrzeugscheinwerfersystems bereitgestellten segmentierten Lichtverteilung gelöst, wobei - das Kraftfahrzeugscheinwerfersystem zumindest ein vorgenanntes erfindungsgemäßes Kraftfahrzeugscheinwerferlichtmodul und eine Detektions- und Steuereinrichtung umfasst, und
- der Bereich ein beispielsweise entgegenkommendes Kraftfahrzeug beinhaltet, wobei das Verfahren folgende Schritte umfasst:
   Schritt E0: Detektieren zumindest eines Kraftfahrzeugs mittels der Detektions- und Steuereinrichtung, wobei das Kraftfahrzeug vorzugsweise ein entgegenkommendes oder ein vorausfahrendes Kraftfahrzeug ist;
   Schritt E1: Ausblenden eines dem zumindest einen beispielsweise entgegenkommenden Kraftfahrzeug entsprechenden Bereichs durch Steuern des Kraftfahrzeugscheinwerferlichtmodul mittels der Detektions- und Steuereinrichtung,
   Schritt E2: Verschieben des ausgeblendeten Bereichs durch Verschieben der entsprechenden Segmente der Lichtverteilung, wobei das Verschieben der entsprechenden Segmente der Lichtverteilung durch Steuern der Antriebsmittel mittels der Detektions- und Steuereinrichtung erfolgt, wobei die Antriebsmittel aufgrund des Steuerns zumindest die Projektionsvorrichtung des Teil-Lichtmoduls um die zumindest eine Verschwenkachse verschwenken und dadurch zumindest eine horizontale Bewegung der entsprechenden Segmente der Lichtverteilung erzeugen.

Die Erfindung samt weiteren Vorteilen ist im Folgenden an Hand beispielhafter Ausführungsformen näher erläutert, die in der Zeichnung veranschaulicht sind. In dieser zeigt
Fig. 1 ein modular aufgebautes Scheinwerferlichtmodul gemäß einer Ausführungsform in perspektivischer Ansicht;
Fig. 2 ein Teil-Lichtmodul;
Fig. 3 eine perspektivische Ansicht modular aufgebautes Scheinwerferlichtmodul gemäß einer weiteren Ausführungsform;
Fig. 4 eine Fernlichtverteilung;
Fig. 6 ein Ausblendszenario nach dem Stand der Technik, und
Fig. 7 ein Beispiel eines erfindungsgemäßen Ausblendszenarios.

In der folgenden Figurenbeschreibung bezeichnen - sofern nicht anders angegeben - gleiche Bezugszeichen gleiche Merkmale.

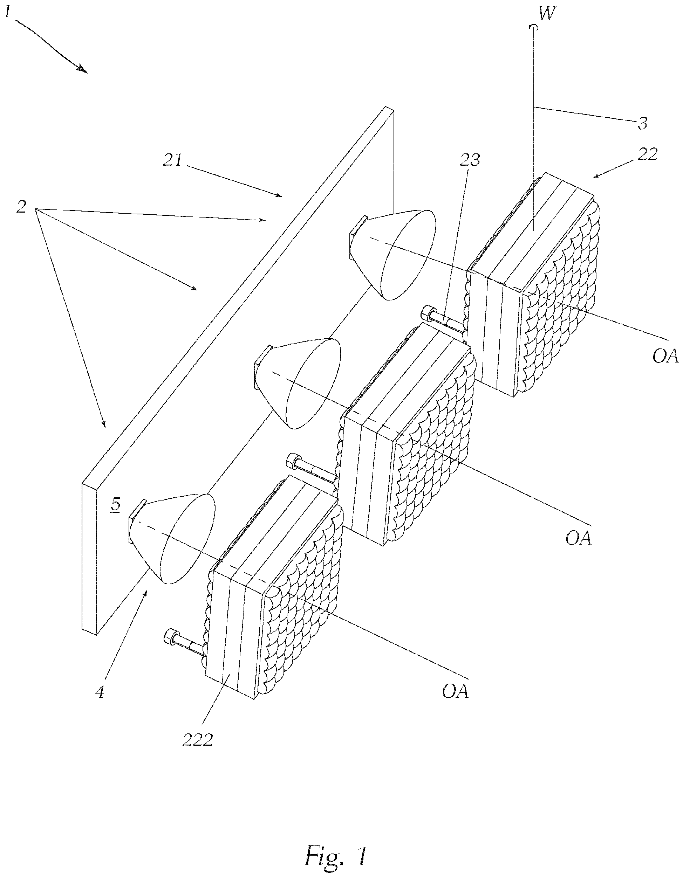

Zunächst wird auf Figur 1 Bezug genommen. Diese zeigt ein modular aufgebautes Scheinwerferlichtmodul 1, welches dem erfindungsgemäßen Kraftfahrzeugscheinwerferlichtmodul entsprechen kann, in perspektivischer Ansicht.

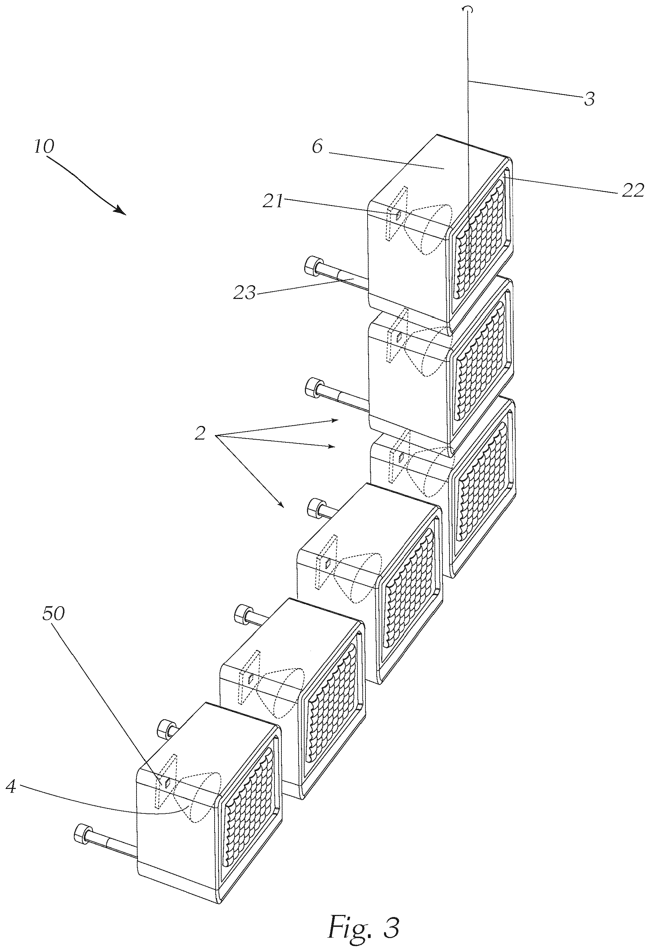

Scheinwerferlichtmodul 1 umfasst drei benachbart (hier nebeneinander) angeordneter Teil-Lichtmodule 2, wobei jedes Teil-Lichtmodul ein Leuchtmittel 21, eine dem Leuchtmittel 21 zugeordnete Projektionsvorrichtung 22 und, vorzugsweise elektrische, Antriebsmittel 23. Das Leuchtmittel 21 ist vorzugsweise dazu eingerichtet beziehungsweise derart ausgebildet, dass es kollimiertes Licht abstrahlt. Im Allgemeinen kann das Leuchtmittel 21 beispielsweise als eine LED-Lichtquelle mit einem zum Kollimieren des Lichts der LED-Lichtquelle vorgelagerten Kollimator 4, wie eine TIR-Linse oder einen Silikon-Optikörper ausgebildet sein. In den Figuren 1 und 3 ist zu erkennen, dass das Leuchtmittel 21 mehrere voneinander beabstandete Leuchtmittel-Bereiche aufweisen können. Diese Leuchtmittel-Bereiche können beispielsweise auf einem gemeinsamen Leuchtmittel-Träger 5, wie eine Platine (Figur 1), oder auf unterschiedlichen, beispielsweise voneinander getrennten Trägern 50 (Figur 3), beispielsweise Platinen, angeordnet sein. Das Leuchtmittel 21 kann als eine halbleiterbasierte Lichtquelle, beispielsweiseeine LED-Lichtquelle ausgebildet sein. Es versteht sich, dass auch jeder Leuchtmittel-Bereich wie eine halbleiterbasierte Lichtquelle, beispielsweiseeine LED-Lichtquelle, ausgebildet sein kann. Weiters versteht es sich, dass jede LED-Lichtquelle mehrere einzelne LEDs aufweisen kann. Es ist zweckmäßig, wenn die einzelnen Leuchtmittel-Bereiche (betrifft auch Figuren 1 und 3), vorzugsweise die einzelnen LED-Lichtquellen, insbesondere die einzelnen LEDs unabhängig voneinander steuerbar sind.

Darüber hinaus kann jedem einzelnen Leuchtmittel-Bereich, vorzugsweise jeder einzelnen LED-Lichtquelle, insbesondere jeder einzelnen LED ein Kollimator 4 vorgelagert sein (siehe Figuren 1 und 3).

Die Projektionsvorrichtung 22 ist eingerichtet, das von dem Leuchtmittel 21 erzeugte Licht in Form zumindest eines, vorzugsweise genau eines Segments einer segmentierten Lichtverteilung beziehungsweise einer segmentierten Lichtverteilung vor die modular aufgebautes Scheinwerferlichtmodul 1 abzubilden.

Weiters ist jedem Teil-Lichtmodul 2 zumindest eine, im Wesentlichen vertikal ausgerichtete Verschwenkachse 3 zugeordnet, um welche zumindest eine, im Wesentlichen vertikal ausgerichtete Verschwenkachse 3 zumindest die Projektionsvorrichtung 22 des Teil-Lichtmoduls 2 verschwenkbar ist. Es ist allerdings denkbar, dass das ganze Teil-Lichtmodul 2 um die im Wesentlichen vertikal ausgerichtete Verschwenkachse 3 verschwenkbar ist (siehe Figur 3). Vorzugsweise schneidet Verschwenkachse 3 eine optische Achse OA des Teil-Lichtmoduls 2, dem die Verschwenkachse 3 zugeordnet ist.

Die Begriffe "oben", "unten", "vertikal" und "horizontal" beziehen sich auf eine fachübliche, zweckmäßige Einbaulage der Teil-Lichtmodule in einem Kraftfahrzeugscheinwerfer, wenn sich dieser Kraftfahrzeugscheinwerfer in einer betriebsmäßigen Lage befindet. Unter der betriebsmäßigen Lage wird dabei jene Lage verstanden, in der der Kraftfahrzeugscheinwerfer in einem Kraftfahrzeug verbaut ist oder beispielsweise in einem lichttechnischen Labor einer Untersuchung einer von dem Kraftfahrzeugscheinwerfer abgestrahlten Lichtverteilung unterzogen wird.

Dabei bedeuten die Ausdrücke "im Wesentlichen vertikal", "im Wesentlichen horizontal" o.Ä., dass die entsprechende Lage im Rahmen gewisser fachüblicher Grenzen zu verstehen ist. Beispielsweise wird mit dem Ausdruck "im Wesentlichen vertikal/horizontal" dem Fachmann vermittelt, dass eine Abweichung von der vertikalen/horizontalen Richtung um etwa 10° bis etwa 20° durchaus annehmbar ist.

Die vorzugsweise elektrischen Antriebsmittel sind 23 eingerichtet, zumindest die Projektionsvorrichtung 22 des Teil-Lichtmoduls 2 beziehungsweise das ganze Teil-Lichtmodul 2 um die zumindest eine Verschwenkachse 3 zu verschwenken, wodurch das zumindest eine Segment zumindest im Wesentlichen horizontal hin- und herbewegbar ist.

Dem Fachmann ist außerdem klar, dass das Scheinwerferlichtmodul eine segmentierte Lichtverteilung bildet, wenn es in Betrieb genommen wird.

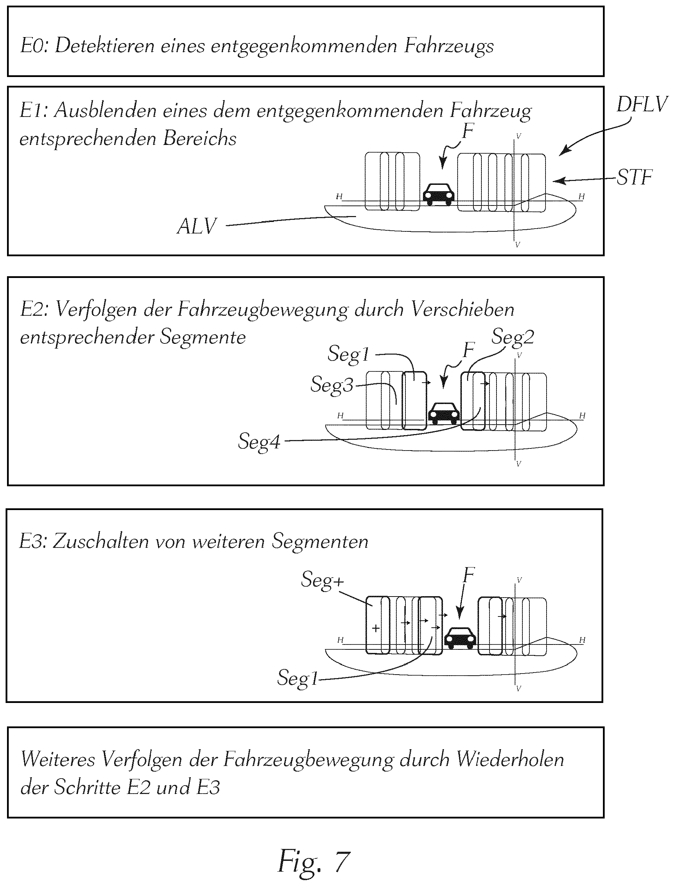

Die oben genannten Segmente sind dem Fachmann bekannt. Diese können beispielsweise in einer horizontalen Reihe nebeneinander angeordnete Segmente einer segmentierten Teil-Fernlichtverteilung STF sein (siehe z.B. Figur 7). Es ist denkbar, dass aus den Teil-Lichtmodulen 2 mehrere über einander liegende Reihen gebildet sind (hier nicht gezeigt), um auf diese Weise die Auflösung der erzeugten Lichtverteilung noch weiter zu verbessern und die Anzahl an Steuerungsfreiheitsgraden zu erhöhen.

Der Figur 1 ist beispielsweise zu entnehmen, dass eine der Projektionsvorrichtungen um die Verschwenkachse um einen vorbestimmbaren Winkel W verdreht ist.

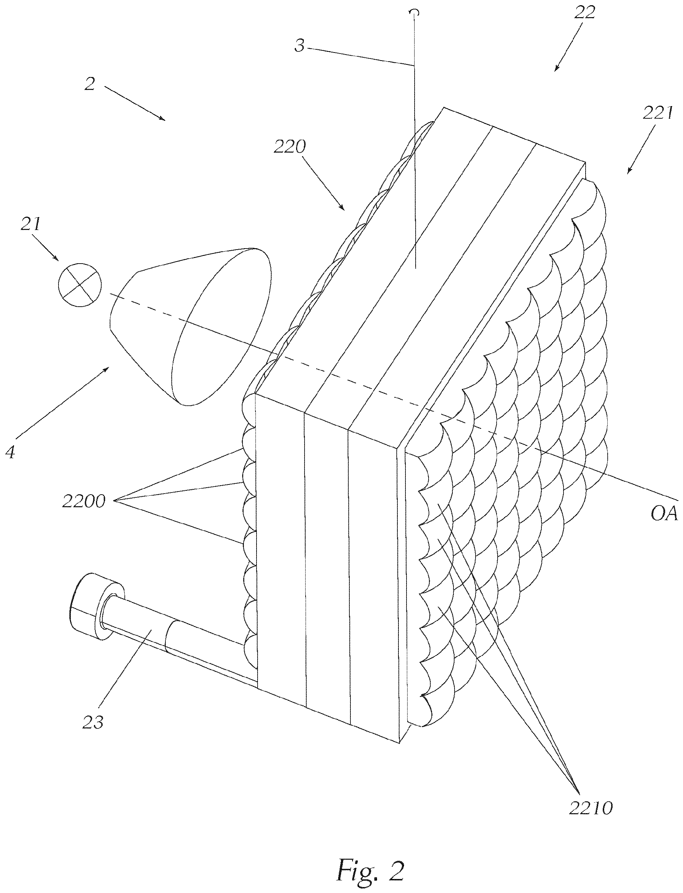

Vorzugsweise umfasst jede Projektionsvorrichtung 22 eine Eintrittsoptik 220, welche eine Mehrzahl in einer zu einer, vorzugsweise mit der optischen Achse OA zusammenfallenden Hauptabstrahlrichtung des Teil-Lichtmoduls 2 im Wesentlichen orthogonal stehenden Ebene matrixartig angeordneter Mikro-Eintrittsoptiken 2200 aufweist. Weiters weist die Projektionsvorrichtung 22 eine der Eintrittsoptik 220 in die Hauptabstrahlrichtung nachgelagerte Austrittsoptik 221, welche eine Mehrzahl in einer zu der Hauptabstrahlrichtung im Wesentlichen orthogonal stehenden Ebene matrixartig angeordneter Mikro-Austrittsoptiken 2210 aufweist, wobei die Mikro-Eintrittsoptiken 2200 und die Mikro-Austrittsoptiken 2210 derart zueinander positioniert sind, dass sie eine Mehrzahl matrixartig angeordneter Mikro-Projektionssysteme bilden, wobei jedes Mikro-Projektionssystem zum Bilden einer Mikro-Lichtverteilung eingerichtet ist und alle Mikro-Lichtverteilungen gemeinsam das zumindest eine Segment der segmentierten Lichtverteilung bilden (siehe Figur 2).

Weiters kann die Projektionsvorrichtung 22 eine Blendenvorrichtung (hier nicht gezeigt) umfassen, welche zwischen der Eintrittsoptik 220 und Austrittsoptik 221 angeordnet sein kann und zum Gestalten der Lichtverteilung und/oder zum Korrigieren von beispielsweise durch die Dicke der in der Mikro-Projektionssystemen verwendeten Linsen entstehenden Abbildungsfehlern vorgesehen ist.

Darüber hinaus kann die Projektionsvorrichtung eine Trägerplatte 222 aufweisen, die vorzugsweise aus einem für das Licht des Leuchtmittels 21 transparenten Material hergestellt ist. Dies kann beispielsweise ein Glassubstrat sein. Für gewöhnlich werden auf die entsprechende Oberfläche der Trägerplatte 222 die Eintrittsoptik 220 beziehungsweise die Austrittsoptik 221 aufgebracht. Projektionsvorrichtungen der oben genannten Art aus matrixartig angeordneten Mikro-Ein- beziehungsweise -Austrittsoptiken 2200, 2210 sind aus dem Stand der Technik bekannt. Auf Details bezüglich Mikro-Projektionssysteme aus Mikro-Eintrittsoptiken und Mikro-Austrittsoptiken wird an dieser Stelle auf die oben genannten Anmeldungen der Anmelderin verwiesen - WO 2015/058227 A1, WO 2017/066817 A1 und WO 2017/066818 A1.

Es ist darüber hinaus denkbar, dass jede Projektionsvorrichtung 22 beziehungsweise das gesamte Teil-Lichtmodul 2 um zwei Verschwenkachsen - zum Beispiel um eine vertikale und um eine horizontale Verschwenkachse - verschwenkbar ist (nicht gezeigt). Die Antriebsmittel 23 können in diesem Fall derart ausgebildet und dazu eingerichtet sein, die entsprechende Projektionsvorrichtung 22 beziehungsweise das entsprechende Teil-Lichtmodul 2 um diese zwei Verschwenkachsen zu verschwenken, wodurch das zumindest eine Segment sowohl im Wesentlichen horizontal als auch im Wesentlichen vertikal hin- und herbewegbar ist.

Die Teil-Lichtmodule können als Teil-Lichtmodule des Projektionstyps ausgebildet sein, wenn die Kollimatoren 4 als TIR-Linsen oder Silikon-Optikkörper ausgebildet sind. Die Teil-Lichtmodule 2 können auch als sogenannte Teil-Lichtmodule des Hybrid-Typs ausgebildet sein, wenn die Kollimatoren 4 als übliche, nicht auf Totalreflexion basierende Reflektoren ausgebildet sind. Zu diesem Typ gehören Lichtmodule, bei welchen das von einem Leuchtmittel erzeugte Licht über einen Reflektor, beispielsweise einen hohlen Körper mit reflektierenden, insbesondere verspiegelten, Oberflächen, auf einen lichtbrechenden Optikkörper, wie eine Linse, gelangen, welcher das Licht in einen Bildraum projiziert. Bei einem Lichtmodul des Hybrid-Typs wird also Licht mittels Reflexion, wobei hier die Totalreflexion ausgeschlossen wird, und Brechung in den Bildraum abgebildet. Bei einem Reflexionstyp handelt es sich um Lichtmodule, bei welchen das Licht des Leuchtmittels über reflektierende(n) Fläche(n) eines / mehrerer Reflektoren direkt in den Bildraum "reflektiert" wird.

Die Projektionsvorrichtungen 22 der einzelnen Teil-Lichtmodule 2 sind vorzugsweise voneinander beabstandet. Dadurch können die Projektionsvorrichtungen 22 unabhängig voneinander verschwenkt werden, was die Einstellung der segmentierten Lichtverteilung vereinfacht.

Es kann zweckmäßig sein, wenn das modular aufgebaute Scheinwerferlichtmodul 1 zusätzlich eine Steuereinrichtung (nicht gezeigt) umfasst, welche Steuereinrichtung eingerichtet beziehungsweise konfiguriert ist, zumindest die Projektionsvorrichtung 22 eines jeden Teil-Lichtmoduls 2 mithilfe der dazugehörigen Antriebsmittel 23 in eine vorbestimmte Lage zu verschwenken. Dadurch wird beispielsweise Erzeugen adaptiver Lichtverteilungen ermöglicht, die an Verkehrslage angepasst werden können. Dabei sei angemerkt, dass das Scheinwerferlichtmodul 1 in sonstigen Fällen, wenn es keine Steuereinrichtung umfasst, durchaus an eine (in Hinblick auf das Scheinwerferlichtmodul) externe Steuereinrichtung angeschlossen werden kann, um die Komponenten der Teil-Lichtmodule, wie das Leuchtmittel 21 und/oder die Antriebsmittel 23 zu steuern.

Die segmentierte Lichtverteilung kann als eine segmentierte Teil-Fernlichtverteilung ausgebildet sein. Dabei kann die segmentierte Teil-Fernlichtverteilung beispielsweise eine ADB-Teil-Fernlichtverteilung sein (ADB steht für Adaptive Driving Beam, auch Glare-Free High Beam genannt). ADB-Lichtverteilungen werden im Allgemeinen mit ADB-Kraftfahrzeugscheinwerfersystemen - kurz ADB-Scheinwerfern - erzeugt. Durch Verschwenken einer Projektionsvorrichtung 22 um die entsprechende vertikale Verschwenkachse 3 wird das entsprechende Segment der Lichtverteilung, beispielsweise der Teil-Fernlichtverteilung, horizontal bewegt. Wird die hin- und herverschwenkt, wird das Segment hin- und herbewegt. Bei den oben genannten ADB-Teil-Fernlichtverteilungen kann beispielsweise eines der Teil-Lichtmodule 2 ausgeschaltet werden, um einen bestimmten Bereich der ADB-Teil-Fernlichtverteilung auszublenden. Dies kann nützlich sein, um eine Blendung von Passanten oder entgegenkommenden Kraftfahrzeugen zu verhindern. Die Größe des auf diese Weise ausgeblendeten Bereichs kann durch Verschwenken der Projektionsvorrichtungen 22 der noch eingeschalteten Teil-Lichtmodule 2 oder, wie oben erwähnt, der ganzen (noch eingeschalteten) Teil-Lichtmodule 2 angepasst/verändert werden. Darüber hinaus ist es denkbar, dass solche ausgeblendeten Bereiche nur durch das Verschwenken erzeugt werden, das heißt, ohne ein oder mehrere Teil-Lichtmodul ausschalten zu müssen.

Eine derartige Anpassung und/oder Ausbildung der ausgeblendeten Bereiche ist nicht nur bei den ADB-Teil-Fernlichtverteilungen sondern bei allen segmentierten Lichtverteilungen möglich, die mittels des erfindungsgemäßen Kraftfahrzeugscheinwerferlichtmoduls erzeugt werden.

Figur 3 zeigt eine etwas andere Ausführungsform des Scheinwerferlichtmoduls 10. Das Scheinwerferlichtmodul 10 unterscheidet sich von dem Scheinwerferlichtmodul 1 der Figur 1 dadurch, dass die Projektionsvorrichtung 22 und das Leuchtmittel 21 um die im Wesentlichen vertikal ausgerichtete Verschwenkachse 3 verschwenkbar sind und die Antriebsmittel 23 eingerichtet sind, die Projektionsvorrichtung 22 und das Leuchtmittel 21 gleichzeitig, vorzugsweise aufeinander abgestimmt, beispielsweise synchron, zu verschwenken.

In diesem Fall sind die Leuchtmittel 21 der Teil-Lichtmodule 2 nicht miteinander verbunden. Jedes Leuchtmittel 21 kann beispielsweise auf einer separaten Platine 50 angeordnet sein. Wie bereits erwähnt kann jedes Leuchtmittel 21 mehrere Leuchtmittel-Bereichen, vorzugsweise mehrere halbleiterbasierten Lichtquellen, beispielsweise mehrere LED-Lichtquellen, insbesondere LEDs umfassen, die vorzugsweise voneinander getrennt steuerbar sind. Darüber hinaus kann jedem einzelnen Leuchtmittel-Bereich, vorzugsweise jeder einzelnen LED-Lichtquelle, insbesondere jeder einzelnen LED ein Kollimator 4 vorgelagert sein. Beispielsweise kann jedes einzelne Leuchtmittel 21 der Figur 3 wie das Leuchtmittel 21 der Figur 1 ausgebildet sein. Die restlichen Merkmale des Scheinwerferlichtmoduls 10 entsprechen im Wesentlichen den Merkmalen des Scheinwerferlichtmoduls 1 gemäß der ersten Ausführungsform (Figur 1), weshalb auch in den Figuren 1, 2 und 3 zum Teil gleiche Bezugszeichen verwenden werden. Beispielhaft sind die Teil-Lichtmodul 2 in einem L-förmigen Muster angeordnet. Ein solches, oder ein anderes Muster ist auch bei einem Scheinwerferlichtmodul 1 der ersten Ausführungsform (Figur 1) möglich. An dieser Stelle sei angemerkt, dass aus Teil-Lichtmodulen 2 sehr viele unterschiedliche Formen eines Scheinwerferlichtmoduls 1,10 gestalten lassen. Dadurch lässt sich ein erfindungsgemäßes Kraftfahrzeugscheinwerferlichtmodul an einer beinah beliebige Form eines Kraftfahrzeugscheinwerfergehäuses anpassen.

Es kann darüber hinaus zweckmäßig sein, wenn jedes Teil-Lichtmodul 2 des Scheinwerferlichtmoduls 10 in einem Tragrahmen 6 angeordnet sind. Auf diese Weise stellt jedes Teil-Lichtmodul 2 eine Einheit/ einen Baustein dar und kann in einem Kraftfahrzeugscheinwerfer vollkommen unabhängig von den anderen Teil-Lichtmodulen 2 ersetzt werden. Figuren 1 und 2 zeigen Teil-Lichtmodule 2 ohne einen Rahmen, Figur 3 zeigt Teil-Lichtmodule 2 in einem Tragrahmen. Hinsichtlich Figuren 1 und 2 ist es denkbar, dass die Projektionsvorrichtungen 22 auch in entsprechenden Tragrahmen (nicht gezeigt) angeordnet sind.

Basierend auf die obige die Gestaltungsfreiheit betreffende Diskussion ist es durchaus vorstellbar, dass das Scheinwerferlichtmodul 1,10 zusätzlich ein Grund-Lichtmodul aufweist. Dass Grund-Lichtmodul kann eingerichtet sein, eine Grund-Lichtverteilung zu bilden, wobei die Grund-Lichtverteilung gemeinsam mit der segmentierten Lichtverteilung eine segmentierte Gesamtlichtverteilung, wie eine segmentierte Fernlichtverteilung bildet.

Die Grund-Lichtverteilung kann beispielsweise eine Abblendlichtverteilung oder eine Vorfeld-Lichtverteilung sein. Dabei kann das Grund-Lichtmodul aus im Wesentlich denselben Teil-Lichtmodulen 2 gebildet sein, wobei die Teil-Lichtmodule des Grund-Lichtmoduls auch starr (nicht verschwenkbar) angeordnet sein können und die restlichen (nicht zum Grund-Lichtmodul gehörenden) Teil-Lichtmodule des Scheinwerferlichtmoduls in Bezug auf das Grund-Lichtmodul verschwenkbar sind. Es ist zum Beispiel denkbar, dass eines oder mehrere Teil-Lichtmodule 2 der unteren Reihe des L-förmigen Scheinwerferlichtmoduls 10 der Figur 3 das Grund-Lichtmodul bilden.

Weiters können das Grund-Lichtmodul und die Teil-Lichtmodule beispielsweise derart angeordnet sind, dass das Scheinwerferlichtmodul U-förmig ausgebildet ist (nicht gezeigt), wobei die Teil-Lichtmodule vertikale Abschnitte und das Grund-Lichtmodul einen im Wesentlichen horizontalen, die vertikalen Abschnitte verbindenden Abschnitt des U-förmigen Scheinwerferlichtmoduls bilden.

Darüber hinaus kann das Grund-Lichtmodul zumindest zwei in vertikaler Richtung voneinander beabstandete, sich im Wesentlichen horizontal erstreckende quaderförmige Submodule umfassen, wobei die Teil-Lichtmodule zwischen den Sublichtmodulen angeordnet und als sich im Wesentlichen vertikal erstreckende Quader ausgebildet sind (nicht gezeigt).

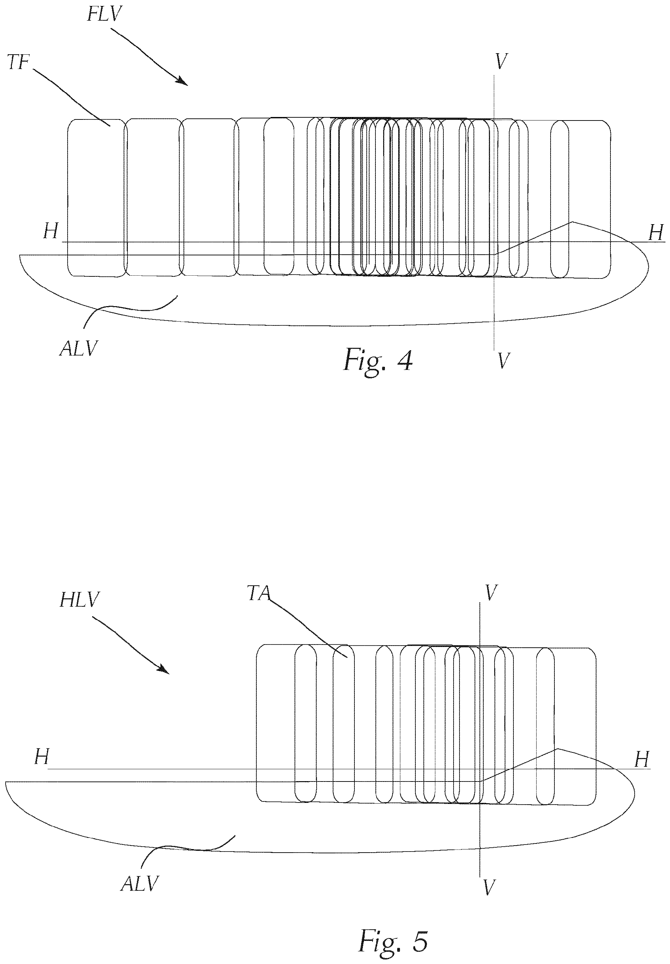

Figur 4 zeigt ein Beispiel einer Lichtverteilung, die mit unterschiedlich großen Teil-Lichtmodulen gebildet werden kann. Dabei sind die Teil-Lichtmodule beispielsweise unterschiedlich hoch und/oder breit. Auf diese Weise können Segmente unterschiedlicher Größen, vorzugsweise Höhen und/oder Breiten, erzeugt werden. Konkret ist in Figur 4 eine Fernlichtverteilung FLV zu erkennen, die als eine Überlagerung einer eine asymmetrisch ansteigende Hell-Dunkel-Grenze aufweisenden Abblendlichtverteilung ALV mit einer segmentierten Teil-Lichtverteilung TF gebildet ist. Es ist zu erkennen, dass die Segmente der segmentierten Teil-Lichtverteilung TF eine im Wesentlichen horizontale Reihe bilden und zu Mitte der Lichtverteilung immer schmäler werden, sodass die Auflösung der Lichtverteilung erhöht wird. Die in Figur 4 zu erkennende Anhäufung der Segmente in der Mitte der Teil-Fernlichtverteilung TF kann durch entsprechendes Verschwenken der einzelnen Teil-Lichtmodule erzielt werden.

Es sei an dieser Stelle angemerkt, dass das erfindungsgemäße Kraftfahrzeuglichtmodul in Kombination mit weiteren starr angeordneten herkömmlichen Lichtmodulen in einem Kraftfahrzeugscheinwerfer kombiniert werden kann. Beispielsweise können Randsegmente der vorgenannten Teil-Lichtverteilung TF der Figur 4 durch solche Lichtmodule erzeugt werden. Weiters kann durch eine Kombination von beispielsweise breiteren (starr oder beweglich) Segmenten im Randbereich (gröbere Auflösung) und schmäleren bewegbaren Segmenten im Zentralbereich der Teil-Lichtverteilung TF könnte die Qualität nochmals gesteigert werden.

Figur 5 zeigt eine weitere Lichtverteilung, die mit dem erfindungsgemäßen Kraftfahrzeugscheinwerferlichtmodul realisierbar ist. Konkret zeigt Figur 5 eine Autobahn-Fernlichtverteilung HLV, welche als eine Überlagerung von einer Teil-Autobahn-Lichtverteilung TA und einer Abblendlichtverteilung ALV gebildet ist. Die Autobahn-Fernlichtverteilung HLV kann beispielsweise aus der vorgenannten Fernlichtverteilung FLV erhalten werden, wenn die die Teil-Lichtverteilung TF bildenden Segmente zur Mitte beispielsweise durch Verschwenken von Teilen der erfindungsgemäßen Teil-Lichtmodule verschoben werden ohne Zuschalten weiterer Teil-Lichtmodule des modular aufgebauten Kraftfahrzeugscheinwerferlichtmoduls. Somit wird die Teil-Autobahn-Lichtverteilung TA erzeugt. Dadurch wird erstens Lichtintensität im Zentrum erhöht und eine größere Sichtweite bei schnellen Fahrgeschwindigkeiten erreicht. Zweitens wird weniger Licht auf der Gegenfahrbahn abgestrahlt, wodurch die Wahrscheinlichkeit, entgegenkommenden Verkehr zu blenden, verringert wird.

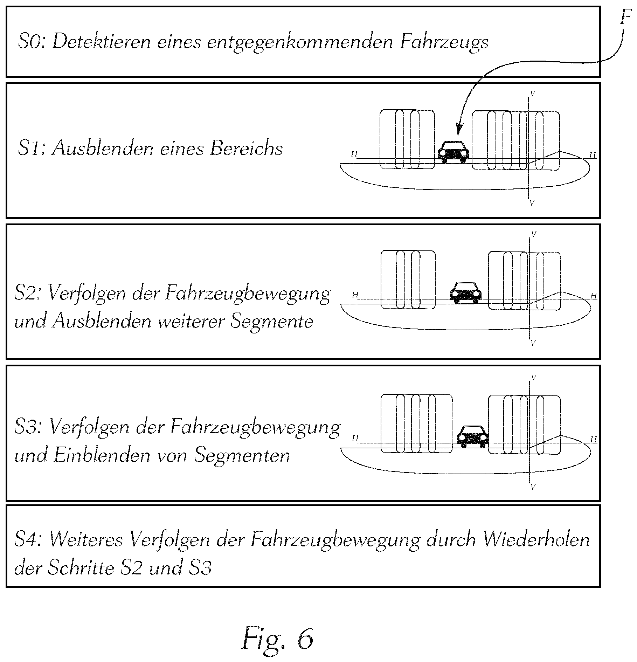

Figur 6 veranschaulicht Schritte eines standardmäßigen Ausblendverfahrens zum Ausblenden eines entgegenkommenden Kraftfahrzeugs, welches Ausblendverfahren herkömmliche ADB-Scheinwerfern ausführen. Im Schritt S0 wird ein entgegenkommendes Kraftfahrzeug F detektiert. Dafür sind in den herkömmlichen ADB-Scheinwerfern Detektions- und Steuereinrichtungen vorgesehen, die beispielsweise ortsauflösende Kameras aufweisen können. Im Schritt S1 wird ein einer gegenwärtigen Position des detektierten Kraftfahrzeugs F entsprechender Bereich der ADB-Lichtverteilung ausgeblendet. Figur 6 lässt erkennen, dass dort gezeigte ADB-Teil-Lichtverteilung mehrere in einer horizontalen Reihe nebeneinander angeordnete im Wesentlichen rechteckige Segmente aufweist. Die Position des detektierten Kraftfahrzeugs F ändert sich, wenn sich das Kraftfahrzeug F den ADB-Scheinwerfern nähert. Die vorgenannte Detektions- und Steuereinrichtung der ADB-Scheinwerfer kann das entgegenkommende Kraftfahrzeug F verfolgen und erkennt zu einem beliebigen Zeitpunkt seine Position. Abhängig von der Bewegung des Kraftfahrzeugs F wird auch der vorgenannte ausgeblendete Bereich mitbewegt. Infolgedessen werden in Schritt S2 weitere Segmente ausgeblendet, da der Fahrer des Kraftfahrzeug F sonst geblendet würde (Figur 6). Der ausgeblendete Bereich ändert seine Größe und es kommt zu Lichtintensitätsschwankungen in der erzeugten Lichtverteilung. In einem weiteren Schritt des herkömmlichen Verfahrens - Schritt S3 - wird ein Segment wieder eingeblendet, aus welchem das Kraftfahrzeug F herausgefahren ist. Schritte S2 und S3 werden solange wiederholt, bis das entgegenkommende Kraftfahrzeug F die ADB-Scheinwerfer passiert hat - Schritt S4. Wie oben erwähnt, kommt bei diesem Ausblendverfahren zu erheblichen Intensitätsschwankungen in der erzeugten Lichtverteilung. Konkret ist in Figur 6 zu erkennen, dass die Lichtintensität in einem das Kraftfahrzeug F direkt umgebenden Bereich um etwa die Hälfte reduziert wird. Zusätzlich variiert die Breite des Schattens (des ausgeblendeten Bereichs) je nach Position des entgegenkommenden Fahrzeugs F. Es entsteht ein sichtbares "Springen" durch das Ein- und Ausschalten der Segmente, sobald sich die Position des ausgeblendeten Fahrzeugs F ändert.

Figur 7 zeigt nun ein Beispiel des erfindungsgemäßen Ausblendverfahrens zum Ausblenden eines entgegenkommenden Kraftfahrzeugs, welches insbesondere mit Mitteln des modular aufgebauten Kraftfahrzeugscheinwerferlichtmoduls durchgeführt werden kann.

Ähnlich wie in dem vorgenannten herkömmlichen Ausblendverfahren wird in Schritt E0 des dynamischen Ausblendverfahrens gemäß der Erfindung mittels einer Detektions- und Steuereinrichtung der zumindest ein erfindungsgemäßes modular aufgebautes Kraftfahrzeugscheinwerferlichtmodul aufweisenden ADB-Scheinwerfer ein entgegenkommendes Fahrzeug F detektiert und in Schritt E1 ein dem entgegenkommenden Fahrzeug F entsprechender Bereich ausgeblendet. Die ADB-Scheinwerfer erzeugen dabei eine dynamische Fernlichtverteilung DFLV, die als eine Überlagerung einer segmentierten Teil-Fernlichtverteilung STF und einer Abblendlichtverteilung ALV gebildet ist, wobei die Segmente der segmentierten Teil-Fernlichtverteilung STF zumindest horizontal hin- und herbewegbar sind.

In Schritt E2 wird der ausgeblendete Bereich durch Verschieben der entsprechenden Segmente der Lichtverteilung bewegt. Dabei wird die Bewegung des entgegenkommenden Fahrzeugs zunächst verfolgt, ohne dass den ausgeblendeten Bereich angrenzende Segmente aus- und/oder eingeblendet werden müssen. Dies kann beispielsweise durch Verschwenken der die entsprechenden Segmente erzeugender Teil-Lichtmodule des Kraftfahrzeugscheinwerferlichtmoduls gemäß der vorliegenden Erfindung erfolgen. Figur 7 lässt die vorgenannte Bewegung der an das entgegenkommende Kraftfahrzeug F angrenzenden Segmente **Seg1, Seg2** der segmentierten Teil-Fernlichtverteilung STF erkennen. Dadurch kann der Schatten (der ausgeblendete Bereich) sehr genau an die Position und die Bewegung des entgegenkommenden Kraftfahrzeugs F angepasst werden. Darüber hinaus wird das vorgenannte durch das Aus-/und Einschalten der einzelnen nichtbewegbaren Segmente verursachte Flackern in der dynamischen Fernlichtverteilung DFLV weitgehend vermieden.

Um die Qualität der Lichtverteilung noch weiter zu verbessern, ist es denkbar die Lichtintensität der entsprechenden Segmente der segmentierten Teil-Fernlichtverteilung STF an die Bewegung des Schattens anzupassen. Beispielsweise kann die Lichtintensität der aufgrund des Verfolgens des entgegenkommenden Kraftfahrzeugs F immer weniger/mehr überlappenden Segmente erhöht/verringert werden. Bezugnehmend auf Figur 7 heißt es beispielsweise, dass die Intensität der Segmente Seg1 und Seg3 erhöht und die Intensität der Segmente Seg2 und Seg4 verringert wird. Dabei kann das Erhöhen / das Verringern der Lichtintensität in Abhängigkeit von dem Verschwenken (der Position und der Geschwindigkeit) der jeweiligen Segmente erfolgen.

Erreicht nun das entgegenkommende Kraftfahrzeug F infolge seiner Bewegung einen Hell-Dunkel-Übergang eines nächsten Segments (Seg 4 in Figur 7), kann auch dieses Segment in Bewegung versetzt werden.

Um die Breite der segmentierten Teil-Fernlichtverteilung STF nicht zu verringern, können weitere Segmente Seg+, beispielsweise an einem entsprechenden Seitenrand der segmentierten Teil-Fernlichtverteilung STF zugeschaltet werden.

Es versteht sich, dass das vorgenannte Verfahren nicht auf entgegenkommende Kraftfahrzeuge beschränkt ist. Es können auch beispielsweise vorausfahrende Kraftfahrzeuge detektiert und ausgeblendet werden.

Dadurch dass die Segmente verschoben werden, erfährt die Intensität der Lichtverteilung keine vorgenannten Schwankungen. Die Leuchtintensität der um das ausgeblendete Fahrzeug befindlichen Segmente der Lichtverteilung wird nicht reduziert. Die Schattenbreite / der ausgeblendete Bereich kann durch das Verschieben während des Ausblendvorgangs immer direkt an die Fahrzeugkante gelegt werden. Bei Positionsänderungen wird das Fahrzeug verfolgt und der abgeblendete Bereich kann mittels verschwenkbaren, oben beschriebenen Teile der Teil-Lichtmodule stufenlos verschoben werden, wodurch sich für den Fahrer die Ausblendszenarien komplett homogen darstellen und keine störenden unruhigen Effekte auftreten (kein "Springen" der Lichtsegmente). Die Ausblendszenarien können neben dem Schwenken noch durch Dimmung der Lichtquellen, beispielsweise halbleiterbasierten Lichtquelle, insbesondere LEDs verfeinert werden.

Die Bezugsziffern in den Ansprüchen dienen lediglich zum besseren Verständnis der vorliegenden Erfindungen und bedeuten auf keinen Fall eine Beschränkung der vorliegenden Erfindungen.

Die vorstehende Diskussion der Erfindung wurde zu Zwecken der Darstellung und Beschreibung vorgestellt. Das Vorstehende soll die Erfindung nicht auf die hierin offenbarte Form oder Formen beschränken. In der vorstehenden ausführlichen Beschreibung sind beispielsweise verschiedene Merkmale der Erfindung in einer oder mehreren Ausführungsformen zum Zwecke der Straffung der Offenbarung zusammengefasst.

## Patentansprüche

1. Kraftfahrzeugscheinwerfersystem mit einer Detektions- und Steuereinrichtung, mittels der zumindest ein Kraftfahrzeug, vorzugsweise ein entgegenkommendes oder ein vorausfahrendes Kraftfahrzeug, detektiert werden kann und einem modular aufgebauten Kraftfahrzeugscheinwerferlichtmodul (1) für einen Kraftfahrzeugscheinwerfer umfassend eine Mehrzahl benachbart angeordneter Teil-Lichtmodule (2), wobei jedes Teil-Lichtmodul (2) ein Leuchtmittel (21) und eine Projektionsvorrichtung (22), die dem Leuchtmittel (21) zugeordnet ist, umfasst, wobei
- die Projektionsvorrichtung (22) eingerichtet ist, von dem Leuchtmittel (21) erzeugtes Licht in Form zumindest eines Segments einer segmentierten Lichtverteilung (TF, TA, STF) vor das modular aufgebautes Kraftfahrzeugscheinwerferlichtmodul (1) abzubilden,
- wobei
jede Projektionsvorrichtung (22) umfasst:
- eine Eintrittsoptik (220), welche eine Mehrzahl in einer zu einer Hauptabstrahlrichtung des Teil-Lichtmoduls (2) im Wesentlichen orthogonal stehenden Ebene matrixartig angeordneter Mikro-Eintrittsoptiken (2200) aufweist,
- eine der Eintrittsoptik (220) in die Hauptabstrahlrichtung nachgelagerte Austrittsoptik (221), welche eine Mehrzahl in einer zu der Hauptabstrahlrichtung im Wesentlichen orthogonal stehenden Ebene matrixartig angeordneter Mikro-Austrittsoptiken (2210) aufweist, wobei die Mikro-Eintrittsoptiken (2200) und die Mikro-Austrittsoptiken (2210) derart zueinander positioniert sind, dass sie eine Mehrzahl matrixartig angeordneter Mikro-Projektionssysteme bilden, wobei jedes Mikro-Projektionssystem zum Bilden einer Mikro-Lichtverteilung eingerichtet ist und alle Mikro-Lichtverteilungen gemeinsam das zumindest eine Segment der segmentierten Lichtverteilung (TF, TA, STF) bilden,
**dadurch gekennzeichnet, dass**,
- jedes Teil-Lichtmodul (2) Antriebsmittel (23) umfasst,
- jedem Teil-Lichtmodul (2) zumindest eine, im Wesentlichen vertikal ausgerichtete Verschwenkachse (3) zugeordnet ist, um welche zumindest die Projektionsvorrichtung (22) des Teil-Lichtmoduls (2) verschwenkbar ist, und
- die Antriebsmittel (23) von der Detektions- und Steuereinrichtung bei Detektieren des zumindest einen Kraftfahrzeugs gesteuert werden, zumindest die Projektionsvorrichtung (22) des Teil-Lichtmoduls (2) um die zumindest eine Verschwenkachse (3) zu verschwenken, wodurch das zumindest eine Segment der segmentierten Lichtverteilung (TF,TA,STF) zumindest im Wesentlichen horizontal hin- und herbewegbar ist,
wobei einem jeden Teil-Lichtmodul (2) zwei Verschwenkachsen - eine im Wesentlichen vertikale (3) und eine im Wesentlichen horizontale Verschwenkachse - zugeordnet sind und die Antriebsmittel (23) eingerichtet sind, zumindest die Projektionsvorrichtung (22) des Teil-Lichtmoduls (2) um diese zwei Verschwenkachsen zu verschwenken wodurch das zumindest eine Segment der segmentierten Lichtverteilung (TF, TA, STF) sowohl im Wesentlichen horizontal als auch im Wesentlichen vertikal hin- und herbewegbar ist.

2. Kraftfahrzeugscheinwerfersystem nach einem der Ansprüche 1, **dadurch gekennzeichnet, dass** die Teil-Lichtmodule (2) als Teil-Lichtmodule des Projektionstyps ausgebildet sind.

3. Kraftfahrzeugscheinwerfersystem nach einem der Ansprüche 1 bis 2, **dadurch gekennzeichnet, dass** die Projektionsvorrichtungen (22) der Teil-Lichtmodule (2) voneinander beabstandet sind.

4. Kraftfahrzeugscheinwerfersystem nach einem der Ansprüche 1 bis 3, **dadurch gekennzeichnet, dass** die segmentierte Lichtverteilung als eine segmentierte Teil-Fernlichtverteilung (TF, TA, STF) ausgebildet ist.

5. Kraftfahrzeugscheinwerfersystem nach einem der Ansprüche 1 bis 4, **dadurch gekennzeichnet, dass** die Projektionsvorrichtung (22) und das Leuchtmittel (21) um die im Wesentlichen vertikal ausgerichtete Verschwenkachse (3) verschwenkbar sind und die Antriebsmittel (23) eingerichtet sind, die Projektionsvorrichtung (22) und das Leuchtmittel (21) gleichzeitig, vorzugsweise aufeinander abgestimmt, beispielsweise synchron, zu verschwenken.

6. Kraftfahrzeugscheinwerfersystem nach einem der Ansprüche 1 bis 5, ferner umfassend ein Grund-Lichtmodul, welches Grund-Lichtmodul eingerichtet ist, eine Grund-Lichtverteilung zu bilden, wobei die Grund-Lichtverteilung gemeinsam mit der segmentierten Lichtverteilung eine segmentierte Gesamtlichtverteilung, beispielsweise eine segmentierte Fernlichtverteilung (FLV, DFLV) bildet.

7. Kraftfahrzeugscheinwerfersystem nach Anspruch 6, **dadurch gekennzeichnet, dass** die Grund-Lichtverteilung als Abblendlichtverteilung (ALV) oder Vorfeld-Lichtverteilung ausgebildet ist.

8. Kraftfahrzeugscheinwerfersystem nach Anspruch 6 oder 7, **dadurch gekennzeichnet, dass** das Grund-Lichtmodul und die Teil-Lichtmodule derart angeordnet sind, dass das Kraftfahrzeugscheinwerferlichtmodul U-förmig ausgebildet ist, wobei die Teil-Lichtmodule vertikale Abschnitte und das Grund-Lichtmodul einen im Wesentlichen horizontalen Abschnitt des U-förmigen Kraftfahrzeugscheinwerferlichtmoduls bilden.

9. Kraftfahrzeugscheinwerfersystem nach Anspruch 6 oder 7, **dadurch gekennzeichnet, dass** das Grund-Lichtmodul zumindest zwei in vertikaler Richtung voneinander beabstandete, sich im Wesentlichen horizontal erstreckende quaderförmige Submodule umfasst, die Teil-Lichtmodule zwischen den Sublichtmodulen angeordnet und als sich im Wesentlichen vertikal erstreckende Quader ausgebildet sind.

10. Kraftfahrzeugscheinwerfersystem mit zumindest einem modular aufgebauten Kraftfahrzeugscheinwerferlichtmodul nach einem der Ansprüche 1 bis 9.

11. Dynamisches Ausblendverfahren zum Ausblenden eines Bereichs einer mittels eines Kraftfahrzeugscheinwerfersystems bereitgestellten segmentierten Lichtverteilung (TF, TA, STF), wobei das Kraftfahrzeugscheinwerfersystem zumindest ein Kraftfahrzeugscheinwerferlichtmodul nach einem der Ansprüche 1 bis 9 und eine Detektions- und Steuereinrichtung umfasst, und der Bereich ein beispielsweise entgegenkommendes Kraftfahrzeug beinhaltet, wobei das Verfahren folgende Schritte umfasst:
Schritt E0: Detektieren zumindest eines Kraftfahrzeugs mittels der Detektions- und Steuereinrichtung;
Schritt E1: Ausblenden eines dem zumindest einen, beispielsweise entgegenkommenden, Kraftfahrzeug entsprechenden Bereichs durch Steuern des Kraftfahrzeugscheinwerferlichtmoduls mittels der Detektions- und Steuereinrichtung;
**gekennzeichnet durch**
Schritt E2: Verschieben des ausgeblendeten Bereichs durch Verschieben der entsprechenden Segmente der segmentierten Lichtverteilung, wobei das Verschieben der entsprechenden Segmente der Lichtverteilung durch Steuern der Antriebsmittel (23) des Kraftfahrzeugscheinwerferlichtmoduls mittels der Detektions- und Steuereinrichtung erfolgt, wobei die Antriebsmittel (23) aufgrund des Steuerns zumindest die Projektionsvorrichtung (22) des Teil-Lichtmoduls (2) um zwei Verschwenkachsen - eine im Wesentlichen vertikale und eine im Wesentlichen horizontale Verschwenkachse - verschwenken und dadurch eine im Wesentlichen horizontale und eine im Wesentlichen vertikale Bewegung der entsprechenden Segmente der Lichtverteilung erzeugen.

## Claims

1. Motor vehicle headlight system comprising a detection and control device usable for detecting at least one motor vehicle, preferably an oncoming motor vehicle or a motor vehicle running ahead, and a motor vehicle headlight light module (1) of modular construction destined for a motor vehicle headlight and comprising a plurality of partial light modules (2) arranged adjacent, each partial light module (2) comprising a luminous source (21) and a projection device (22) assigned to the luminous source (21), wherein
- the projection device (22) is configured to image light generated by the luminous source (21) in form of at least one segment of a segmented light distribution (TF, TA, STF) in front of the motor vehicle headlamp light module (1) of modular construction,
- wherein each projection device (22) comprises
- entrance optics (220) comprising a plurality of micro-entrance optics (2200) arranged in a matrix-like manner in a plane substantially orthogonal to a main radiation direction of the partial light module (2),
- an exit optics (221) downstream of the entrance optics (220) in the main radiation direction, comprising a plurality of micro-exit optics (2210) arranged in a matrix-like manner in a plane substantially orthogonal to the main radiation direction, the micro-entrance optics (2200) and the micro-exit optics (2210) being positioned with respect to one another so as to form a plurality of micro-projections system systems arranged in a matrix-like arrangment, each micro-projection system being configured to form a micro-light distribution, and all micro-light distributions together forming the at least one segment of the segmented light distribution (TF, TA, STF),
**characterized in that**
- each partial light module (2) comprises drive means (23),
- each partial light module (2) is assigned at least one pivot axis (3) oriented essentially vertical, about which at least the projection device (22) of the partial light module (2) is pivotable, and
- the drive means (23) are controlled by the detection and control device upon detection of the at least one motor vehicle so as to pivot at least the projection device (22) of the partial light module (2) about the at least one pivot axis (3), such that the at least one segment of the segmented light distribution (TF,TA,STF) is movable back and forth at least substantially horizontally,
wherein each partial light module (2) is assigned two pivot axes - a substantially vertical pivot axis (3) and a substantially horizontal pivot axis - and the drive means (23) are configured to pivot at least the projection device (22) of the partial light module (2) about said two pivot axes, such that the at least one segment of the segmented light distribution (TF, TA, STF) is movable back and forth both substantially horizontally and substantially vertically.

2. Motor vehicle headlamp system according to any one of claims 1, **characterized in that** the partial light modules (2) are realized as projection-type partial light modules.

3. Motor vehicle headlamp system according to any one of claims 1 to 2, **characterized in that** the projection devices (22) of the partial light modules (2) are spaced apart from one another.

4. Motor vehicle headlamp system according to any one of claims 1 to 3, **characterized in that** the segmented light distribution is realized as a segmented partial high-beam distribution (TF, TA, STF).

5. Motor vehicle headlamp system according to any one of claims 1 to 4, **characterized in that** the projection device (22) and the luminous source (21) are pivotable about the pivot axis oriented essentially vertical (3), and the drive means (23) are configured to pivot the projection device (22) and the luminous source (21) simultaneously, preferably in a concerted manner, for example synchronously.

6. Motor vehicle headlamp system according to any one of claims 1 to 5, further comprising a basic light module, which basic light module is configured to generate a basic light distribution, the basic light distribution forming, together with the segmented light distribution, a segmented overall light distribution, for example a segmented high-beam light distribution (FLV, DFLV).

7. Motor vehicle headlamp system according to claim 6, **characterized in that** the basic light distribution is realized as a dipped-beam light distribution (ALV) or forefront light distribution.

8. Motor vehicle headlamp system according to claim 6 or 7, **characterized in that** the basic light module and the partial light modules are arranged such that the motor vehicle headlamp light module is U-shaped, wherein the partial light modules form vertical sections and the basic light module forms a substantially horizontal section of the U-shaped motor vehicle headlamp light module.

9. Motor vehicle headlight system according to claim 6 or 7, **characterized in that** the basic light module comprises at least two cuboidal submodules spaced apart from each other vertically and extending substantially in horizontal direction, the partial light modules being arranged between the sub-light modules and being formed as cuboids extending substantially in vertical direction.

10. Motor vehicle headlamp system comprising at least one motor vehicle headlight light module of modular construction according to any one of claims 1 to 9.

11. Dynamic blanking method for blanking a region of a segmented light distribution (TF, TA, STF) provided using a motor vehicle headlamp system, wherein the motor vehicle headlamp system comprises at least one motor vehicle headlamp light module according to any one of claims 1 to 9 and a detection and control device, and the region includes a motor vehicle, for example oncoming vehicle, the method comprising:
step E0: detecting at least one motor vehicle using the detection and control device;
step E1: masking a region corresponding to the at least one, for example oncoming, motor vehicle by controlling the motor vehicle headlight module using the detection and control device;
**characterized by**
step E2: displacing the blanked region by displacing the corresponding segments of the segmented light distribution, wherein displacing the corresponding segments of the light distribution is carried out by controlling the driving means (23) of the motor vehicle headlamp light module using the detection and control device, wherein the driving means (23), due to the control, pivot at least the projection device (22) of the partial light module (2) about two pivoting axes - a substantially vertical pivoting axis and a substantially horizontal pivoting axis - and thus generating a substantially horizontal movement and a substantially vertical movement of the corresponding segments of the light distribution.

## Revendications

1. Système de phare de véhicule automobile comprenant un dispositif de détection et commande au moyen duquel au moins un véhicule automobile, de préférence un véhicule automobile venant en sens inverse ou précédant devant, peut être détecté, et un module d'éclairage de phare de véhicule automobile (1) de construction modulaire pour un phare de véhicule automobile comportant une pluralité de modules d'éclairage partiels (2) disposés au voisinage les uns des autres, chaque module d'éclairage partiel (2) comprenant une source d'éclairage (21) et un dispositif de projection (22) qui est associé à la source d'éclairage (21),
- le dispositif de projection (22) étant conçu pour reproduire la lumière générée par la source d'éclairage (21) sous la forme d'au moins un segment d'une répartition de lumière segmentée (TF, TA, STF) devant le source d'éclairage de phare de véhicule automobile (1) de construction modulaire,
- chaque dispositif de projection (22) comportant :
- une optique d'entrée (220) qui comporte une pluralité de micro-optiques d'entrée (2200) réparties en matrice dans un plan sensiblement orthogonal à une direction de rayonnement principale du module d'éclairage partiel (2),
- une optique de sortie (221) placée en aval de l'optique d'entrée (220) dans la direction principale de rayonnement, comportant une pluralité de micro-optiques de sortie (2210) réparties en matrice dans un plan sensiblement orthogonal à la direction principale de rayonnement, les micro-optiques d'entrée (2200) et les micro-optiques de sortie (2210) étant positionnées les unes par rapport aux autres de manière à former une pluralité de microsystèmes de projection répartis en matrice, chaque microsystème de projection étant conçu pour former une micro-distribution de lumière et toutes les micro-distributions de lumière formant ensemble ledit au moins un segment de la distribution de lumière segmentée (TF, TA, STF),
**caractérisé en ce que**
- chaque module d'éclairage partiel (2) comporte des moyens d'entrainement (23),
- à chaque module d'éclairage partiel (2) est associé au moins un axe de pivotement (3) orienté essentiellement verticale, autour duquel au moins le dispositif de projection (22) du module d'éclairage partiel (2) peut pivoter, et
- les moyens d'entrainement (23) sont commandés par le dispositif de détection et commande lors de la détection dudit au moins un véhicule automobile, pour faire pivoter au moins le dispositif de projection (22) du module d'éclairage partiel (2) autour dudit au moins un axe de pivotement (3), par quoi ledit au moins un segment de la répartition lumineuse segmentée (TF, TA, STF) est déplaçable en va-et-vient au moins sensiblement horizontalement,
à chaque module d'éclairage partiel (2) étant associés deux axes de pivotement - un axe de pivotement essentiellement vertical (3) et un axe de pivotement essentiellement horizontal - et les moyens d'entrainement (23) étant agencés pour faire pivoter au moins le dispositif de projection (22) du module d'éclairage partiel (2) autour de ces deux axes de pivotement, ce faisant ledit au moins un segment de la répartition lumineuse segmentée (TF, TA, STF) déplaçable en va-et-vient aussi bien essentiellement horizontalement que essentiellement verticalement.

2. Système de phare de véhicule automobile selon l'une quelconque des revendications 1, **caractérisé en ce que** les modules d'éclairage partiels (2) sont des modules d'éclairage partiels du type à projection.

3. Système de phare de véhicule automobile selon l'une quelconque des revendications 1 à 2, **caractérisé en ce que** les dispositifs de projection (22) des modules d'éclairage partiels (2) sont espacés les uns des autres.

4. Système de phare de véhicule automobile selon l'une quelconque des revendications 1 à 3, **caractérisé en ce que** la répartition lumineuse segmentée est réalisée sous la forme d'une répartition lumineuse partielle segmentée (TF, TA, STF).

5. Système de phare de véhicule automobile selon l'une quelconque des revendications 1 à 4, **caractérisé en ce que** le dispositif de projection (22) et la source d'éclairage (21) sont pivotable autour de l'axe de pivotement (3) orienté sensiblement verticalement et les moyens d'entrainement (23) sont agencés pour faire pivoter le dispositif de projection (22) et la source d'éclairage (21) simultanément, de préférence de manière coordonnée, par exemple de manière synchrone.

6. Système de phare de véhicule automobile selon l'une quelconque des revendications 1 à 5, comprenant en outre un module d'éclairage de base, lequel module d'éclairage de base est agencé pour former une répartition lumineuse de base, la répartition lumineuse de base formant, conjointement avec la répartition lumineuse segmentée, une répartition lumineuse globale segmentée, par exemple une répartition lumineuse segmentée longue distance (FLV, DFLV).

7. Système de phare de véhicule automobile selon la revendication 6, **caractérisé en ce que** la répartition lumineuse de base est conçue comme une répartition lumineuse de croisement (ALV) ou une répartition lumineuse de champ avant.

8. Système de phare de véhicule automobile selon la revendication 6 ou 7, **caractérisé en ce que** le module d'éclairage de base et les modules d'éclairage partiels sont disposés de telle sorte que le module de phare de véhicule automobile est réalisé en forme de U, les modules d'éclairage partiels formant des sections verticales et le module d'éclairage de base formant une section sensiblement horizontale du module de phare de véhicule automobile en forme de U.

9. Système de phare de véhicule automobile selon la revendication 6 ou 7, **caractérisé en ce que** le module d'éclairage de base comprend au moins deux sous-modules parallélépipédiques espacés l'un de l'autre dans la direction verticale et s'étendant sensiblement horizontalement, les modules d'éclairage partiels étant disposés entre les sous-modules d'éclairage et étant réalisés sous forme de parallélépipèdes s'étendant sensiblement verticalement.

10. Système de phare de véhicule automobile comprenant au moins un module d'éclairage de phare de véhicule automobile de construction modulaire selon l'une quelconque des revendications 1 à 9.

11. Procédé de masquage dynamique pour masquer une zone d'une répartition lumineuse segmentée (TF, TA, STF) fournie au moyen d'un système de phare de véhicule automobile, le système de phare de véhicule automobile comprenant au moins un module de phare de véhicule automobile selon l'une quelconque des revendications 1 à 9 et un dispositif de détection et commande, et ladite zone comportant un véhicule automobile qui par exemple vient en sens inverse, le procédé comprenant:
étape E0: détecter au moins un véhicule automobile au moyen du dispositif de détection et commande ;
étape E1: masquer une zone correspondant audit au moins un véhicule automobile, par exemple venant en sens inverse, en commandant le module de phare du véhicule automobile au moyen du dispositif de détection et commande ;
**caractérisée par**
étape E2 : déplacer la zone masquée par déplacement des segments correspondants de la répartition lumineuse segmentée, le déplacement des segments correspondants de la répartition lumineuse étant effectué par commande des moyens d'entrainement (23) du module d'éclairage de phare du véhicule automobile au moyen du dispositif de détection et commande, les moyens d'entrainement (23), en raison de la commande, faisant pivoter au moins le dispositif de projection (22) du module d'éclairage partiel (2) autour de deux axes de pivotement - un axe de pivotement essentiellement vertical et un axe de pivotement essentiellement horizontal - et produisant ainsi un mouvement essentiellement horizontal et un mouvement essentiellement vertical des segments correspondants de la répartition lumineuse.
